# EUROPÄISCHE PATENTSCHRIFT

(11) **EP 3 031 673 B1**
(45) Veröffentlichungstag und Bekanntmachung des Hinweises auf die Patenterteilung: **04.10.2017**
(21) Anmeldenummer: 15192515.3
(22) Anmeldetag: 02.11.2015
(51) Int. Cl.: B60R 19/34

(54) **ENERGIEABSORPTIONSVORRICHTUNG FÜR EIN FAHRZEUG**
ENERGY ABSORBING DEVICE FOR A VEHICLE
DISPOSITIF D'ABSORPTION D'ENERGIE POUR UN VEHICULE

(30) Priorität: 09.12.2014 DE 102014225304
(43) Veröffentlichungstag der Anmeldung: 15.06.2016
(73) Patentinhaber: SUSPA GmbH, 90518 Altdorf (DE)
(72) Erfinder: Röll, Sven, 92353 Postbauer-Heng (DE); Waldmüller, Stefan, 90518 Altdorf (DE); El-Azzeh, Murad, 90518 Altdorf (DE); Welker, Thomas, 90518 Altdorf (DE)
(74) Vertreter: Rau, Schneck & Hübner Patentanwälte Rechtsanwälte PartGmbB

(56) Entgegenhaltungen:
- WO-A1-2014/173476
- DE-A1-102008 039 513
- DE-A1-102012 200 410
- US-A1- 2014 203 578

## Beschreibung

Die Erfindung betrifft eine Energieabsorptionsvorrichtung für ein Fahrzeug.

DE 43 45 550 C2 offenbart einen Pralldämpfer zur Abstützung eines Stoßfängers eines Kraftfahrzeugs. Aufprallenergie wird durch gezielte Deformation in Verformungs- und Wärmeenergie umgewandelt.

Weitere Energieabsorptionsvorrichtungen sind bekannt aus DE 10 2012 200 410 A1, DE 10 2008 039 513 A1, US 2014/0 203 578 A1 und WO 2014/173 476 A1.

Der Erfindung liegt die Aufgabe zu Grunde, eine Energieabsorptionsvorrichtung mit verbesserten Energieabsorptionseigenschaften, insbesondere mit erhöhter Querstabilität, zu schaffen.

Diese Aufgabe wird durch die Merkmale des Anspruchs 1 gelöst. Der Kern der Erfindung besteht darin, dass eine Energieabsorptionsvorrichtung ein Aussteifungselement aufweist, das ein Aufprallelement mit mindestens einem, mit dem Aufprallelement verbundenen Energieabsorptionselement verbindet. Dadurch ist eine Konstruktion gebildet, die, insbesondere als Struktur der Energieabsorptionsvorrichtung, mittels des Aussteifungselements stabilisiert und insbesondere querstabilisiert ist. Das Aufprallelement dient zum Einleiten von Aufprallenergie in die Energieabsorptionsvorrichtung. Insbesondere ist das Aufprallelement ein Querträger, der bei der Verwendung in einem Kraftfahrzeug als Stoßfänger bezeichnet wird. Das

Aufprallelement ist ein Hauptquerträger. Das mindestens eine Energieabsorptionselement ist insbesondere fest, insbesondere durch Verschweißen, mit dem Aufprallelement verbunden. Das Energieabsorptionselement dient zum Absorbieren der Aufprallenergie, insbesondere durch kontrollierte Deformation. Durch kontrollierte Deformation wird kinetische Energie, die im Wesentlichen entgegen der Fahrrichtung des Fahrzeugs gerichtet ist, in Verformungs- und/oder Wärmeenergie umgewandelt. Das Aussteifungselement ist insbesondere fest mit dem Aufprallelement und insbesondere fest mit dem mindestens einen Energieabsorptionselement verbunden. Das Aussteifungselement ist insbesondere mit dem mindestens einen Energieabsorptionselement verschweißt. Es ist auch möglich, dass das Aussteifungselement mit dem Energieabsorptionselement und insbesondere mit einer daran angebrachten Flanschplatte als Verbindungselement verschraubt ist. Die feste Verbindung zwischen Energieabsorptionselement und Aussteifungselement ist lösbar oder unlösbar. Durch das Aussteifungselement bildet die Energieabsorptionsvorrichtung eine geschlossene Rahmenstruktur. Durch die geschlossene Rahmenstruktur ist die Energieabsorptionsvorrichtung selbst stabil ausgeführt. Die Eigensteifigkeit der Energieabsorptionsvorrichtung ist erhöht. Das Aussteifungselement ist ein Hilfsquerträger. Die Energieabsorptionsvorrichtung ist insbesondere Bestandteil eines Fahrzeugs, insbesondere eines Kraftfahrzeugs, insbesondere eines Automobils. Die Energieabsorptionsvorrichtung ist in dem Kraftfahrzeug integriert. Die Energieabsorptionsvorrichtung ist insbesondere fest mit der Karosserie des Kraftfahrzeugs verbunden. Die Energieabsorptionsvorrichtung ist insbesondere in Fahrrichtung an einem vorderen Ende des Kraftfahrzeugs angeordnet und dient zum Aufnehmen und Absorbieren von Energie in Folge eines Aufpralls, insbesondere eines Frontalaufpralls auf das Kraftfahrzeug. Die Energieabsorptionsvorrichtung ermöglicht insbesondere aber auch die Absorption von Energie eines Aufpralls dessen

Wirkrichtung quer zur Fahrrichtung des Kraftfahrzeugs orientiert ist. Die geschlossene Rahmenstruktur ist im Wesentlichen dreieckförmig, wobei die Dreieckseiten jeweils zumindest abschnittsweise durch das Aufprallelement, dass mindestens ein Energieabsorptionselement und das Aussteifungselement vorgegeben werden. Das geschlossene Rahmenelement kann auch eine andere geometrische Grundform aufweisen. In die geschlossene Rahmenstruktur können zusätzliche Elemente integriert werden. Wesentlich ist, dass die Rahmenstruktur geschlossen ist.

Die Energieabsorptionsvorrichtung mit mindestens zwei, insbesondere mit genau zwei, Energieabsorptionselementen ermöglicht eine verbesserte Einleitung, Aufnahme und Absorption der Aufprallenergie. Insbesondere sind die Energieabsorptionselemente jeweils in einem Endbereich des Aufprallelements angeordnet. Die Energieabsorptionsvorrichtung ist vorteilhaft an eine bestehende Fahrzeugkarosserie ankoppelbar. Insbesondere ist die Anordnung der Energieabsorptionselemente bezüglich einer in Fahrrichtung orientierten Mittenebene der Energieabsorptionsvorrichtung symmetrisch. Das Aussteifungselement ist mit allen Energieabsorptionselementen verbunden. Die Energieabsorptionsvorrichtung weist genau ein Aussteifungselement auf.

Eine Energieabsorptionsvorrichtung, bei der das Aussteifungselement zumindest abschnittsweise quer zu einer Längsachse des mindestens einen Energieabsorptionselements orientiert ist, ermöglicht eine effektive Auf nahme und Einleitung von Aufprallenergie. Insbesondere ist die Längsachse des Energieabsorptionselements im Wesentlichen parallel zur Fahrrichtung des Fahrzeugs, also zur Mittenebene der Energieabsorptionsvorrichtung. Im Wesentlichen parallel bedeutet in diesem Zusammenhang, dass auch ein Neigungswinkel der Längsachse des Energieabsorptionselements gegenüber der Mittenebene der Energieabsorptionsvorrichtung von wenigen Winkelgrad möglich ist. Der Neigungswinkel sollte höchstens 15° und insbesondere höchstens 10° betragen. Als besonders vorteilhaft hat sich erwiesen, wenn der Neigungswinkel zwischen 2° und 8° beträgt. Die geneigte Anordnung des Energieabsorptionselements gegenüber der Mittenebene kann beispielsweise daraus resultieren, dass das Aufprallelement zumindest abschnittsweise gekrümmt und insbesondere im Bereich der Verbindung mit dem mindestens einen Energieabsorptionselement nicht senkrecht zur Mittenebene angeordnet ist. Das mindestens eine Energieabsorptionselement erstreckt sich im Wesentlichen senkrecht von dem Auf prallelement.

Eine Energieabsorptionsvorrichtung mit einem Verbindungselement ermöglicht ein komfortables Verbinden der Energieabsorptionsvorrichtung mit dem Fahrzeug. Insbesondere ist das Verbindungselement als Flansch ausgeführt, um die Energieabsorptionsvorrichtung am Fahrzeugrahmen, insbesondere stirnseitig, festzuschrauben. Die Energieabsorptionsvorrichtung ist mittels des Verbindungselements lösbar mit dem Fahrzeug verbindbar. Im Falle eines Fahrzeugaufpralls und einer irreversiblen Deformation mindestens eines Energieabsorptionselements kann die Energieabsorptionsvorrichtung unproblematisch demontiert und ausgetauscht werden. Es sind auch andere Verbindungsarten möglich. Wesentlich ist, dass das Verbindungselement eine sichere und feste Verbindung mit dem Fahrzeug sicherstellt. Die Lösbarkeit der Verbindung ist vorteilhaft.

Eine Energieabsorptionsvorrichtung, bei der das Aufprallelement als erstes Profilelement ausgeführt ist, ermöglicht eine leichtbauende und struktursteife Ausführung des Aufprallelements. Insbesondere ist das Aufprallelement als erstes Hohlprofilelement ausgeführt. Derartige Profilelemente können kostengünstig hergestellt werden. Insbesondere weist das erste Hohlprofilelement mindestens einen geschlossenen ersten Profilquerschnittsbereich, insbesondere zwei geschlossene erste Profilquerschnittsbereiche auf. Die geschlossenen ersten Profilquerschnittsbereiche stellen Hohlkammern dar, die zu einer weiteren Erhöhung der Steifigkeit des Aufprallelements führen. Das erste Hohlprofilelement kann insgesamt als offenes Profilelement ausgeführt sein. Es ist auch denkbar, dass keine geschlossenen Profilquerschnittsbereiche vorgesehen sind. In diesem Fall ist das Aufprallelement als offenes Profilelement ausgeführt. Insbesondere weist das Hohlprofilelement mindestens eine Querausnehmung auf. Die Querausnehmung ist in Profildickenrichtung orientiert, also im Wesentlichen parallel zur Mittenebene der Energieabsorptionsvorrichtung. In Profilhöhenrichtung ist die Querausnehmung insbesondere zwischen zwei ersten Profilquerschnittsbereichen angeordnet.

Eine Energieabsorptionsvorrichtung, bei der das Aussteifungselement als zweites Profilelement, insbesondere als zweites Hohlprofilelement, ausgeführt ist, ist das Leichtbaupotential für die Energieabsorptionsvorrichtung zusätzlich erhöht. Das zweite Profilelement weist mindestens einen geschlossenen zweiten Profilquerschnittsbereich auf. Der geschlossene zweite Profilquerschnittsbereich ist eine zweite Hohlkammer und ermöglicht eine steife, leichtbauende Realisierung des Aussteifungselements. Es ist möglich, dass mehr als eine zweite Hohlkammer vorgesehen ist. Die Hohlkammern können miteinander verbunden sein, insbesondere mittels eines offenen Profilelements. Das zweite Profilelement kann insgesamt als offenes Profilelement ausgeführt sein, indem die geschlossenen Hohlkammern zusammen mit dem verbindenden Element eine geöffnete Profilform bilden. Es ist auch denkbar, dass das zweite Profilelement keine Hohlprofilelemente, also keine Hohlkammern aufweist. Das zweite Profilelement ist dann ausschließlich ein offenes Profilelement.

Eine Energieabsorptionsvorrichtung, bei der das Aussteifungselement zumindest bereichsweise in das Aufprallelement eintaucht, schafft insbesondere in einer Aufprallsituation, also bei einer Deformation der Energieabsorptionsvorrichtung, eine platzsparende Lösung, insbesondere eine platzsparende Anordnung des deformierten Materials, insbesondere der deformierten Energieabsorptionsvorrichtung. Insbesondere ist ein Platzbedarf für das deformierte Aussteifungselement reduziert. Im deformierten Zustand ist das Aussteifungselement insbesondere zumindest bereichsweise innerhalb des Aufprallelements angeordnet. Insbesondere ist eine Höhe des zweiten Profilelements im Wesentlichen maximal so groß wie eine Höhe einer Querausnehmung eines ersten Profilelements. Insbesondere wird dadurch vermieden, dass deformiertes Material zwischen dem Aufprallelement und den Fahrzeugrahmen angesammelt wird. Die Bildung einer unerwünschten Materialdichte in diesem Bereich wird verhindert. Die Energieabsorptionsvorrichtung bietet den erforderlichen Raum für die gezielte Deformation. Bei vergleichsweise identischem Bauraum mit einer Energieabsorptionsvorrichtung gemäß dem Stand der Technik bietet die vorliegende Energieabsorptionsvorrichtung eine erhöhte Sicherheit für das Fahrzeug.

Eine Energieabsorptionsvorrichtung, bei der die Quersteifigkeit einstellbar ist, ermöglicht eine flexible Anpassung der Energieabsorptionsvorrichtung an unterschiedliche Sicherheitserfordernisse. Insbesondere weichen die Sicherheitserfordernisse für verschiedene Kraftfahrzeuge voneinander ab. Es ist auch denkbar, dass verschiedene Sicherheitserfordernisse aufgrund nationaler Vorschriften voneinander abweichen. Insbesondere ist davon auszugehen, dass für schwere Kraftfahrzeuge und/oder Kraftfahrzeuge, die mit durchschnittlich höheren Geschwindigkeiten gefahren werden, höhere Sicherheitsanforderungen an die Energieabsorptionsvorrichtung gestellt werden. Höhere Sicherheitsanforderungen bedeuten, dass die Energieabsorptionsvorrichtung geeignet sein muss, einen vergleichsweise höheren Betrag einer Aufprallenergie absorbieren und/oder bei erhöhter Aufprallenergie bestehen zu können. Insbesondere durch die Ausführung der Verbindung zwischen dem Aussteifungselement und dem Aufprallelement, beispielsweise als Schweißnaht, insbesondere durch Festlegung der Länge der Schweißnaht, kann die Steifigkeit und insbesondere die Durchbiegung des Aussteifungselements gezielt eingestellt werden.

Eine Energieabsorptionsvorrichtung, bei der das Energieabsorptionselement als Doppelrohrelement ausgeführt ist mit einem Innenrohr und einem Außenrohr, die konzentrisch zur Längsachse des Doppelrohrelements angeordnet und entlang der Längsachse verschieblich zueinander ausgeführt sind, ermöglicht die Nutzung eines an sich bekannten Systems für die kontrollierte Energieabsorption durch Deformation.

Eine Energieabsorptionsvorrichtung, bei der das Innenrohr mit dem Aufprallelement und das Außenrohr mit dem Verbindungselement jeweils, insbesondere fest, verbunden ist, ermöglicht eine effektive Einleitung der Aufprallenergie in die Energieabsorptionsvorrichtung. Bei einem Aufprall wird das Aufprallelement und das daran fest verbundene Innenrohr verlagert. Das Innenrohr wird durch das karosseriefeste Außenrohr gezogen und dabei kontrolliert deformiert. Das Außenrohr ist gegenüber dem Fahrzeug nicht verlagerbar.

Eine Energieabsorptionsvorrichtung, bei der das Aussteifungselement mit dem Verbindungselement fest verbunden ist, ermöglicht eine Entkopplung von Aussteifungselement und Energieabsorptionselement. Das Aussteifungselement ist mit dem Energieabsorptionselement mittelbar verbunden. Die mittelbare Verbindung erfolgt über das Verbindungselement.

Eine Energieabsorptionsvorrichtung, bei der das Verbindungselement eine Sollknickstelle aufweist, ermöglicht die Begrenzung einer maximal übertragbaren Querkraft auf das Fahrzeug durch ein konstruktives Element. Zusätzliche Sicherheitselemente sind entbehrlich. Insbesondere ist die Sollknickstelle derart ausgeführt, dass bei Erreichen eines vorgebbaren Deformationsweges der Energieabsorptionselemente, insbesondere entlang der Längsachse, im Wesentlichen keine Querkraft von dem Energieabsorptionselement über das Verbindungselement auf das Aussteifungselement übertragbar ist. Die von dem Energieabsorptionselement auf das Aussteifungselement übertragbare Querkraft ist minimal.

Gemäß einer alternativen Ausführungsform kann die Energieabsorptionsvorrichtung als Energieabsorptionselement ein einteiliges Profilelement aufweisen. Insbesondere ist das einteilige Profilelement als offenes Profilelement ausgeführt. Das Profilelement ist insbesondere im Wesentlichen U-förmig ausgeführt. Aus dem Stand der Technik sind insbesondere geschlossene Hohlprofilelemente als Energieabsorptionselemente bekannt. Derart geschlossene Profilelemente werden als Knautschelement oder als Crashbox bezeichnet. Das Energieabsorptionselement kann auch als einteiliges, geschlossenes Profilelement ausgeführt sein. Ein einteiliges Profilelement ist unkompliziert herstellbar. Die Energieabsorptionsvorrichtung ermöglicht eine kostensparende Umsetzung.

Eine Energieabsorptionsvorrichtung, bei der das Aussteifungselement an einer Verbindungsstelle mit dem einteiligen Profilelement fest verbunden ist, insbesondere verschweißt ist, weist eine erhöhte Steifigkeit auf. Insbesondere ist durch die unmittelbare Anbindung des Aussteifungselements an dem einteiligen Profilelement die Steifigkeit derart erhöht, dass ein geschlossener Profilquerschnitt für das Energieabsorptionselement entbehrlich ist. Ein zusätzliches, das offene Profil des Energieabsorptionselements verschließenden Bauteils, ist entbehrlich.

Eine Energieabsorptionsvorrichtung, bei der die Steifigkeit des einteiligen Profilelements durch dessen freie Länge entlang des Längsachse festgelegt ist, wobei die freie Länge insbesondere durch das Aufprallelement und das Aussteifungselement begrenzt ist, ermöglicht eine gezielte Einstellung der Steifigkeit des Energieabsorptionselements. Je kleiner die freie Länge gewählt wird, desto größer ist die Stabilität gegen unerwünschtes Ausknicken des einteiligen Profilelements.

Das Aussteifungselement ist insbesondere zumindest abschnittsweise parallel zu dem Aufprallelement angeordnet. Das Aussteifungselement ist mit einem mittleren Bereich der Energieabsorptionsvorrichtung insbesondere parallel zu dem Aufprallelement angeordnet. Der mittlere Bereich weist insbesondere eine Breite auf, die einem Drittel der Gesamtbreite der Energieabsorptionsvorrichtung entspricht. Insbesondere beidseitig anschließend an den mittleren Bereich erstrecken sich Seitenbereiche. In dem mindestens einen Seitenbereich ist das Aussteifungselement quer zu dem Aufprallelement angeordnet. Die Breite der Seitenbereiche entspricht jeweils im Wesentlichen der Breite des mittleren Bereichs.

Das Aufprallelement und das Aussteifungselement sind insbesondere jeweils als offenes Profilelement ausgeführt. Das Profilelement ist einteilig ausgeführt und beispielsweise im Strangpressverfahren urformend hergestellt. Das Profilelement ist insbesondere aus metallischem Werkstoff, beispielsweise aus einer Aluminiumlegierung oder aus Stahl hergestellt. Das Profilelement kann alternativ auch aus mehreren Einzelteilen, die miteinander gefügt sind, insbesondere geschweißt sind, hergestellt sein. Das Profilelement weist eine Öffnung auf. Die Öffnung des Aufprallelements ist der Öffnung des Aussteifungselements zugewandt. Das Aufprallelement und das Aussteifungselement sind, insbesondere in dem mittleren Bereich, derart angeordnet, dass das eine Element an der Öffnung des jeweils anderen Elements anliegt. Das Aufprallelement und das Aussteifungselement bilden ein geschlossenes Hohlprofil. Die Steifigkeit der Energieabsorptionsvorrichtung ist zusätzlich erhöht.

Bei einem Aufprall können das Aufprallelement und das Aussteifungselement ineinander eintauchen. Das bedeutet, dass das eine Element in die Öffnung des jeweils anderen Elements, also in das offene Profilelement, eintauchen kann. Nach der Deformation der Energieabsorptionsvorrichtung ist das eine Element in dem offenen Profilelementbereich des anderen Elements angeordnet.

Das Aussteifungselement verbindet insbesondere mindestens zwei und insbesondere genau zwei, Energieabsorptionselemente unmittelbar. Das bedeutet, dass das Aussteifungselement mit einem ersten Ende mit einem ersten Energieabsorptionselement und mit einem zweiten Ende mit einem zweiten Energieabsorptionselement unmittelbar, insbesondere durch Schweißen, verbunden ist. Das Aussteifungselement verbindet mindestens zwei und insbesondere genau zwei Energieabsorptionselemente direkt miteinander und/oder mit dem Aufprallelement.

Weitere vorteilhafte Ausgestaltungen, zusätzliche Merkmale und Einzelheiten der Erfindung ergeben sich aus der nachfolgenden Beschreibung von zwei Ausführungsbeispielen anhand der Zeichnung. Es zeigen:
- Fig. 1: eine Seitenansicht einer erfindungsgemäßen Energieabsorptionsvorrichtung gemäß einem ersten Ausführungsbeispiel in einem undeformierten Zustand,
- Fig. 2: eine vergrößerte, geschnittene Perspektivdarstellung der Energieabsorptionsvorrichtung gemäß Fig. 1,
- Fig. 3: eine Fig. 1 entsprechende Darstellung in einem deformierten Zustand,
- Fig. 4: eine Fig. 2 entsprechende Ansicht der Energieabsorptionsvorrichtung in Fig. 3,
- Fig. 5: eine Fig. 1 entsprechende Darstellung einer Energieabsorptionsvorrichtung gemäß einem zweiten Ausführungsbeispiel,
- Fig. 6: eine Fig. 2 entsprechende Darstellung der Energieabsorptionsvorrichtung gemäß dem zweiten Ausführungsbeispiel,
- Fig. 7: eine Fig. 3 entsprechende Darstellung der Energieabsorptionsvorrichtung gemäß dem zweiten Ausführungsbeispiel,
- Fig. 8: eine Fig. 4 entsprechende Darstellung der Energieabsorptionsvorrichtung gemäß dem zweiten Ausführungsbeispiel.

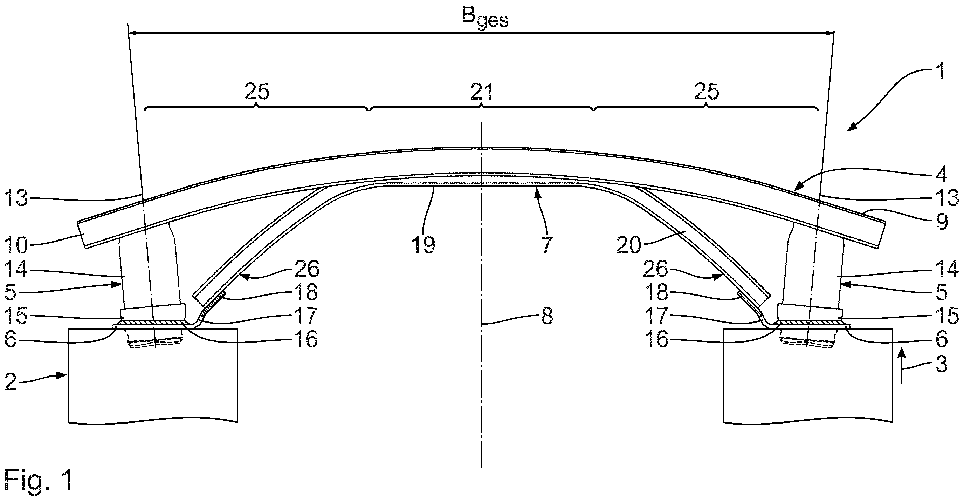

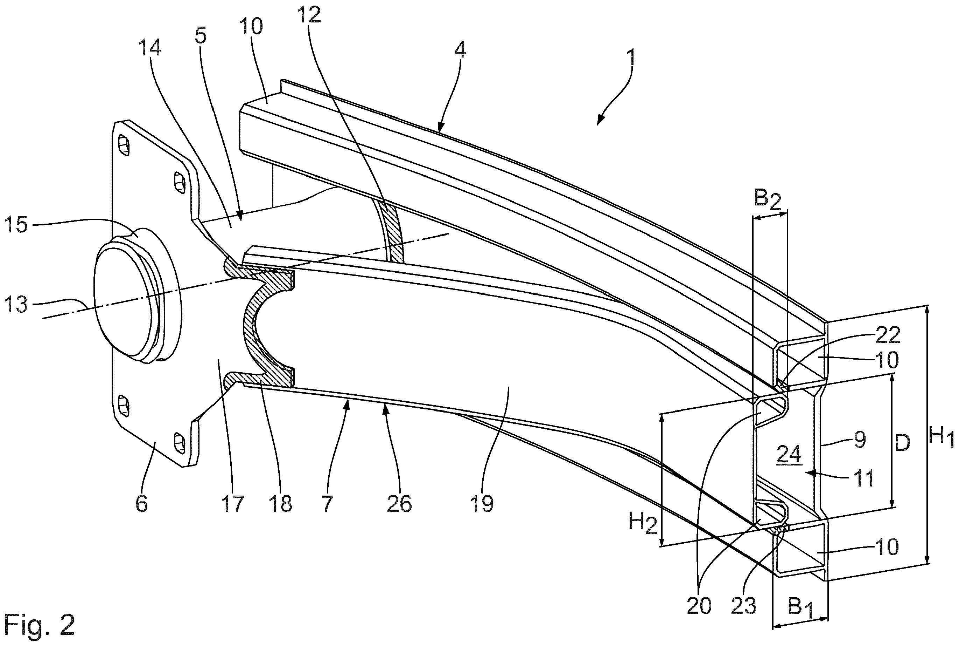

Ein in Fig. 1 bis 4 als Ganzes mit 1 bezeichnete Energieabsorptionsvorrichtung ist in einem Frontbereich und/oder in einem Heckbereich eines Fahrzeugs, insbesondere eines Kraftfahrzeugs, angeordnet. Stellvertretend für das Kraftfahrzeug ist in Fig. 1 ein Teil des Fahrzeugrahmens 2 schematisch angeordnet. Gemäß Fig. 1 ist der Fahrzeugrahmen 2 durch zwei Längsträger teilweise symbolisch dargestellt. Die Längsträger können mittels eines nicht dargestellten Querträgers zu einer Rahmenstruktur verbunden sein. Insbesondere im Frontbereich des Fahrzeugs wird auf die Verwendung eines Querträgers häufig verzichtet. Im Heckbereich kann ein Blechelement, also ein offenes Profilelement, anstelle eines geschlossenen Profilelements für den Querträger verwendet werden. Das Fahrzeug gibt eine Fahrrichtung 3 vor. Entlang der Fahrrichtung 3 ist die Energieabsorptionsvorrichtung 1 in einem vorderen Bereich des Fahrzeugs und insbesondere an einem vorderen Ende des Fahrzeugrahmens 2, insbesondere stirnseitig an den Längsträgern, angeordnet. Die Energieabsorptionsvorrichtung 1 ist in das Kraftfahrzeug integriert. Die Energieabsorptionsvorrichtung 1 ist Bestandteil des Kraftfahrzeugs.

Die Energieabsorptionsvorrichtung 1 umfasst ein in Fahrrichtung 3 vorderes Aufprallelement 4, an dem zwei Energieabsorptionselemente 5 befestigt sind. Die Energieabsorptionselemente 5 sind jeweils mittels eines Verbindungselements 6 mit den Längsträgern des Fahrzeugrahmens 2 verbunden. Mit den Verbindungselementen 6 und mit dem Aufprallelement 4 jeweils verbunden ist ein Aussteifungselement 7.

Die Energieabsorptionsvorrichtung 1 weist eine Mittenebene 8 auf. Die Mittenebene 8 ist parallel zur Fahrrichtung 3 des Kraftfahrzeugs orientiert. Bezüglich der Mittenebene 8 ist die Energieabsorptionsvorrichtung 1 spiegelsymmetrisch ausgeführt.

Das Aufprallelement 4 ist bezogen zur Fahrrichtung 3 quer angeordnet. Das Aufprallelement 4 wird auch als Querträger bezeichnet. Der Querträger ist insbesondere horizontal orientiert. Das Aufprallelement 4 ist als erstes Profilelement in Form eines ersten Hohlprofilelements ausgeführt. Das Aufprallelement 4 weist ein in Fahrrichtung 3 vorne angeordnetes Deckelement 9 auf. An einer dem Fahrzeugrahmen 2 zugewandten Rückseite des Deckelements sind zwei geschlossene erste Profilquerschnittsbereiche 10 angeordnet. Das erste Profilelement ist entlang einer Profilelementlängsachse gekrümmt ausgeführt. Senkrecht zu der Profillängsachse weist der Profilquerschnitt eine erste Profilhöhe H₁ auf, die im Wesentlichen durch das Deckelement 9 vorgegeben ist, und eine erste Profilbreite B₁, die im Wesentlichen durch die Breite der ersten Profilquerschnittsbereiche 10 vorgegeben ist. Die beiden ersten Profilquerschnittsbereiche 10 sind entlang der Höhenrichtung des ersten Profilelements beabstandet zueinander angeordnet. Durch die beabstandete Anordnung ist entlang der Höhenrichtung an dem Aufprallelement 4 eine Querausnehmung 11 gebildet. Die Querausnehmung 11 des ersten Profilelements ist geöffnet. Entlang der Höhenrichtung des ersten Profilelements sind die ersten Profilquerschnittsbereiche 10 im Bereich eines oberen Endes und eines unteren Endes des Deckelements 9 angeordnet. Die ersten Profilquerschnittsbereiche 10 sind im Wesentlichen maximal beabstandet an der Rückseite des Deckelements 9 angeordnet. Ein Abstand D zwischen den ersten Profilquerschnittsbereichen 10 entlang der Höhenrichtung legt die Höhe der Querausnehmung 11 fest. Das erste Profilelement ist einstückig, insbesondere aus Metall, insbesondere aus einer Aluminiumlegierung, hergestellt.

An der Rückseite des Deckelements 9 sind jeweils die Energieabsorptionselemente 5 mit dem Aufprallelement 4 fest verbunden. Die Verbindung ist durch eine umlaufende erste Schweißnaht 12 ausgeführt. Das Energieabsorptionselement 5 weist eine Längsachse 13 auf. Die Längsachse 13 ist gegenüber der Mittenebene 8 geneigt.

Das Energieabsorptionselement 5 ist als Doppelrohrelement ausgeführt und umfasst ein Innenrohr 14 und ein Außenrohr 15. Die beiden Rohre 14, 15 sind entlang der Längsachse 13 konzentrisch zueinander angeordnet. Die beiden Rohre 14, 15 sind verschieblich entlang der Längsachse 13 zueinander ausgeführt. Gemäß dem gezeigten Ausführungsbeispiel ist das Innenrohr 14 über die erste Schweißnaht 12 mit dem Aufprallelement 4 verschweißt. Das Außenrohr 15 weist entlang der Längsachse 13 gegenüber dem Innenrohr 14 eine reduzierte Länge auf. Das Außenrohr 15 dient als Führungs-/Deformations-Element. Der Innendurchmesser des Außenrohrs 15 ist entlang eines inneren Umfangs des Außenrohrs 15 zumindest bereichsweise kleiner als ein Außendurchmesser des Innenrohrs 14. Insbesondere ist die Innenkontur des Außenrohrs 15 unterschiedlich zu der Außenkontur des Innenrohrs 14 ausgeführt. Insbesondere ist die Außenkontur des Innenrohrs 14 rund. Die Innenkontur des Außenrohrs 15 ist insbesondere unrund. Insbesondere weist die Innenkontur des Außenrohrs 15 radial nach innen ragende Vorsprünge auf, die in die Außenkontur des Innenrohrs 14 hineinragen.

Durch eine axiale Verschiebung des Innenrohrs 14 durch das Außenrohr 15 entlang der Längsachse 13 wird das Innenrohr 14 deformiert, also verformt. Insbesondere werden entlang der Längsachse 13 sickenförmige Vertiefungen in das Innenrohr 14 von dem Außenrohr 15 gezogen. Die Verformungsarbeit, also der Betrag der absorbierten Energie, ist von der Anzahl und/oder der Größe der radial nach innen vorstehenden Ausnehmungen an dem Außenrohr 15 sowie dem maximalen Verschiebeweg des Innenrohrs 14 entlang der Längsachse 13 einstellbar. Die unrunde Innenkontur des Außenrohrs 15 kann durch verschiedene Fertigungsverfahren und/oder zusätzlich eingeprägte Formelemente geschaffen werden. Derartige Doppelrohrelemente als Energieabsorptionselemente sind beispielsweise aus der DE 43 45 550 C2 bekannt. Bezüglich konstruktiver Details und der Funktionsweise des Doppelrohrelements, das auch als Pralldämpfer bezeichnet wird, wird auf die genannte Druckschrift verwiesen.

Das Energieabsorptionselement 5 ist an dem Außenrohr 15 fest mit dem Verbindungselement 6 verbunden. Dazu ist eine umlaufende zweite Schweißnaht 16 vorgesehen. Das Verbindungselement 6 ist als Flansch ausgeführt, der eine rechteckförmige Grundform aufweist. In Eckenbereichen der Rechteckform ist jeweils eine Durchgangsbohrung vorgesehen, die für Verbindungsschrauben dienen, um die Energieabsorptionsvorrichtung 1 mittels der Verbindungselemente 6 am Fahrzeugrahmen durch Verschrauben lösbar zu befestigen. Das Verbindungselement 6 weist ferner einen Anbindungsabschnitt 17 auf. Der Anbindungsabschnitt 17 erstreckt sich von dem flächigen Flanschbereich des Verbindungselements 6 einteilig als gebogene Lasche. Der Anbindungsabschnitt 17 ist mit dem Aussteifungselement 7 fest verbunden. Dazu dient eine dritte Schweißnaht 18.

Das Aussteifungselement 7 ist als zweites Profilelement in Form eines zweiten Hohlprofilelements ausgeführt. Das zweite Hohlprofilelement weist eine geschlossene Rückseite 19 sowie zwei sich jeweils von der Rückseite 19 dem Aufprallelement 4 zugewandte geschlossene zweite Profilquerschnittsbereiche 20 auf. Die geschlossenen zweiten Profilquerschnittsbereiche 20 sind insbesondere als Umbördelungen eines jeweils freien Blechstreifenrandes ausgeführt. Das zweite Profilelement weist eine zweite Höhe H₂ und eine zweite Breite B₂ auf. Gemäß dem gezeigten Ausführungsbeispiel gilt B₂ < B₁. Insbesondere gilt: H₂ ≤ D, insbesondere H₂ ≤ 1,1 x D, insbesondere H₂ ≤ 1,05 x D und insbesondere H₂ ≤ 1,02 x D.

Die zweite Profilhöhe H₂ ist kleiner als der Abstand D der ersten Profilquerschnittsbereiche 10. Bei einer Belastung entlang der Fahrrichtung 3 kann das Aussteifungselement 7, zumindest bereichsweise, insbesondere in dem mittleren Bereich 21, in das Aufprallelement 4 eintauchen. Wesentlich ist also, dass eine Platzeinsparung in dem Knautschbereich der Energieabsorptionsvorrichtung 1 dadurch ermöglicht wird, dass das Aussteifungselement 7 und das Aufprallelement 4 entlang der Fahrrichtung 3 überlappend zueinander angeordnet sein können. Dies ist beispielsweise auch dadurch möglich, dass das Aussteifungselement 7 eine Querausnehmung aufweist, in die das erste Profilelement, also das Aufprallelement 4, eintauchen kann.

Das Aussteifungselement 7 ist im Wesentlichen quer zur Mittenebene 8 und quer zur Fahrrichtung 3 orientiert. Das Aussteifungselement 7 wird auch als Hilfsquerträger bezeichnet. Das Aussteifungselement 7 ist horizontal orientiert. Das Aussteifungselement 7 ist an den beiden freien Enden jeweils an der Rückseite 19 über die dritte Schweißnaht 18 mit dem Verbindungselement 6 verschweißt.

In einem mittleren Bereich 21 der Energieabsorptionsvorrichtung 1 ist das Aussteifungselement 7 im Wesentlichen parallel zu dem Aufprallelement 4 angeordnet. In diesem mittleren Bereich 21 ist das Aufprallelement 4 mit dem Aussteifungselement 7 fest, unlösbar verbunden. Die feste Verbindung zwischen Aufprallelement 4 und Aussteifungselement 7 ist durch eine vierte Schweißnaht 22 und eine fünfte Schweißnaht 23 ausgeführt. Die vierte Schweißnaht 22 ist zwischen den beiden jeweils in Höhenrichtung der Profilelemente oben angeordneten ersten Profilquerschnittsbereich 10 und zweiten Profilquerschnittsbereich 20 ausgeführt. Entsprechend ist die fünfte Schweißnaht 23 zwischen den beiden unteren Profilquerschnittsbereichen 10, 20 ausgeführt.

Das Aufprallelement 4 und das Aussteifungselement 7 sind als offene Profilelement mit den jeweiligen Öffnungen einander zugewandt angeordnet und derart verbunden, dass in dem mittleren Bereich 21 ein geschlossenes Hohlprofil gebildet wird. In dem mittleren Bereich 21 ist ein geschlossener Profilquerschnitt durch das Deckelement 9, die ersten Profilquerschnittsbereiche 10, die zweiten Profilquerschnittsbereiche 20 und die Rückseite 19, begrenzt. Dieser geschlossene Profilquerschnitt umschließt einen Innenraum 24. Der Innenraum 24 ist entlang der Profillängsachsen geöffnet.

Beidseitig an den mittleren Bereich 21, also senkrecht zur Mittenebene 8, schließt sich an den mittleren Bereich 21 jeweils ein Seitenbereich 25 an. Die Gesamtbreite B_{ges} ergibt sich aus beiden Seitenbereichen 25 und dem dazwischen angeordneten mittleren Bereich 21.. Als vorteilhaft hat sich erwiesen, wenn die Breiten der Bereiche identisch sind, wenn also der mittlere Bereich 21 und die beiden Seitenbereiche 25 jeweils ein Drittel der Gesamtbreite B_{ges} betragen. Durch die Breite, insbesondere des mittleren Bereichs 21, in dem das Aufprallelement 4 mit dem Aussteifungselement 7 verschweißt ist, wird die Steifigkeit der Energieabsorptionsvorrichtung 1 festgelegt. Die Steifigkeit der Energieabsorptionsvorrichtung 1 kann dadurch verändert werden, dass die Länge der vierten Schweißnaht 22 und der fünften Schweißnaht 23 verändert wird.

In den Seitenbereichen 25 ist ein jeweils äußerer Schenkel 26 des Aussteifungselements 7 quer zu dem Aufprallelement 4 und quer zu dem Energieabsorptionselement 5 angeordnet. Der Schenkel 26 ist an seinem freien Ende mit dem Verbindungselement 6 und in dem mittleren Bereich 21 mit dem Aufprallelement 4 verschweißt. Das Aussteifungselement 7, insbesondere der Schenkel 26, das Aufprallelement 4 und das Energieabsorptionselement 5 mit dem Verbindungselement 6 bilden eine geschlossene Rahmenstruktur. Insbesondere weist die Rahmenstruktur eine dreieckähnliche Form auf. Es sind auch andere Grundformen der Rahmenstruktur denkbar, beispielsweise eine viereckige, fünfeckige, ovale oder kreisähnliche Grundform.

Mittels des Aussteifungselements 7 sind die beiden Energieabsorptionselemente 5 seitlich, also in einer Richtung quer zur Fahrrichtung 3, also quer zur Mittenebene 8 der Energieabsorptionsvorrichtung 1, stabilisiert und ausgesteift. Insbesondere dann, wenn ein Aufprall eine resultierende Kraft auf die Energieabsorptionsvorrichtung 1 ausübt, deren Wirkungslinie gegenüber der Mittenebene 8 mit einem Neigungswinkel orientiert ist, der eine besonders große Querkrafteinwirkung, also eine seitliche Krafteinwirkung, bewirkt, ist das Energieabsorptionselement 5 zusätzlich ausgesteift. Ein derartiger Neigungswinkel liegt beispielsweise zwischen 20° und 90°, kann aber auch kleiner als 20°sein. Durch das Aussteifungselement 7 ist gewährleistet, dass das Energieabsorptionselement 5 in Folge der Querbelastung nicht unbeabsichtigt in einer Richtung quer zur Mittenebene 8 abkippt. Das Risiko eines Versagens der Energieabsorptionsvorrichtung 1 in Folge eines unbeabsichtigten Abkippens der Energieabsorptionselemente 5 ist verhindert. Die Energieabsorptionsvorrichtung 1 weist eine erhöhte Querstabilität und Seitensteifigkeit auf. Insbesondere ist die Steifigkeit des Aufprallelements 4 durch das Aussteifungselement 7 zusätzlich erhöht. Die Energieabsorptionsvorrichtung 1 ermöglicht eine leichtbauende und kostensparende Konstruktion. Insbesondere ist es denkbar, das Energieabsorptionselement 5, insbesondere das Innenrohr 14 und das Außenrohr 15 aus Aluminiumwerkstoff herzustellen. Es sind aber auch andere, insbesondere metallische Werkstoffe denkbar.

Der freie Bereich des Anbindungsabschnitts 17, also zwischen dem flächigen Flanschabschnitt und der dritten Schweißnaht 18 ist als Sollknickstelle ausgeführt. Das bedeutet, dass bei der Deformation der Energieabsorptionsvorrichtung 1, also bei einem Verschieben des Außenrohrs 15 mit dem Verbindungselement 6 entlang der Längsachse 13 hin zu dem Aufprallelement 4 der Anbindungsabschnitt 17 derart deformiert wird, dass er in Kraftübertragungsrichtung für eine Querkraft von dem Verbindungselement 6 in das Aussteifungselement 7 ausknickt. Das Ausknicken erfolgt also insbesondere dann, wenn eine aktuelle Querkraft eine vorher festlegbare, maximal übertragbare Querkraft erreicht. Die Übertragung von größeren Querkräften von dem Verbindungselement 6, die beispielsweise von dem Energieabsorptionselement 5 eingeprägt worden sind, ist dann nicht mehr möglich. Die Übertragung von Querkräften von den Energieabsorptionselementen 5 in das Aussteifungselement 7 ist durch konstruktive Maßnahmen begrenzt. Insbesondere ist der Verschiebeweg entlang der Längsachse 13 einstellbar, ab dem das Ausknicken statt findet. Die Sollknickstelle ermöglicht die Festlegung einer maximalübertragbaren Querkraft. In Folge der Gestaltung des Anbindungsabschnitts 17 ist die Verschiebeposition von Innenrohr 14 und Außenrohr 15, an der der Anbindungsabschnitt 17 ausknickt, geometrisch festgelegt.

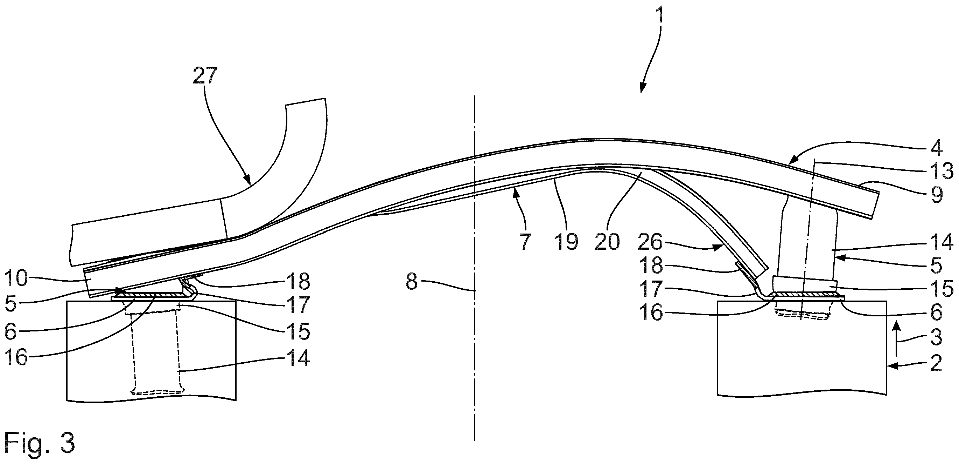

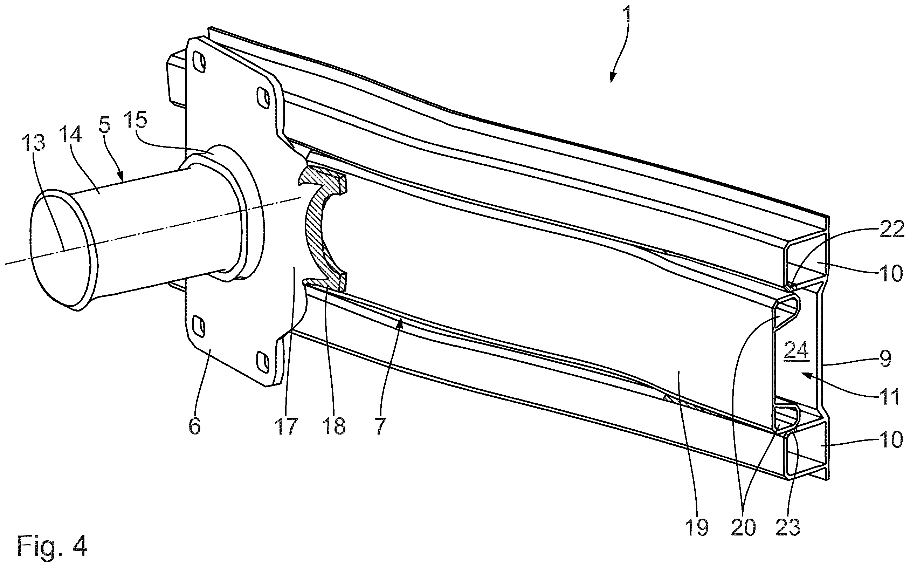

Ausgehend von einem undeformierten Zustand der Energieabsorptionsvorrichtung 1 wird deren Funktionsweise anhand einer deformierten Anordnung der Energieabsorptionsvorrichtung 1 anhand Fig. 3 und 4 erläutert. Die Deformation der Energieabsorptionsvorrichtung 1 ergibt sich in Folge eines Aufpralls des Kraftfahrzeugs auf ein Hindernis 27. Das Hindernis 27 kann beispielsweise eine Mauer, ein Bauwerk oder ein anderes Kraftfahrzeug sein. Das Kraftfahrzeug prallt auf das Hindernis 27, insbesondere mit dem in Fig. 3 links dargestellten Seitenbereich 25 der Energieabsorptionsvorrichtung 1. In Folge des Aufpralls wird das Aufprallelement 4 deformiert und insbesondere entgegen der Fahrrichtung 3 verschoben. Mit dem Aufprallelement 4 wird das daran angeschweißte Innenrohr 14 des Energieabsorptionselements 5 verschoben. Vorteilhaft ist es, wenn die Längsträger des Fahrzeugrahmens 2 als Hohlelemente ausgeführt sind. Das Innenrohr 14 wird in einen von dem Längsträger des Fahrzeugrahmens 2 gebildeten Hohlraum eindringen, wie dies in Fig. 3 schematisch dargestellt ist. In diesem deformierten Zustand ist das Außenrohr 15 benachbart zu oder an dem Aufprallelement 4 angeordnet. Der Anbindungsabschnitt 17 ist ausgeknickt, weist also eine Strukturinstabilität auf. Eine Übertragung von Querkräften, die die maximalübertragbare Querkraft übersteigen, ist in diesem Zustand nicht mehr möglich. Wie insbesondere aus Fig. 4 deutlich wird, ist das Aussteifungselement 7 in dem Seitenbereich 25 in die Querausnehmung 11 des Aufprallelements 4 im Wesentlichen vollständig eingetaucht. Dadurch ergibt sich ein Bauraumvorteil bei effektiver Energieabsorption. Die Energieabsorptionsvorrichtung 1 ermöglicht einen vergrößerten, entlang der Mittenebene 8 orientierten Knautschraum.

Das in Fig. 3 rechts dargestellte Energieabsorptionselement 5 ist im Wesentlichen unverbraucht. Eine Deformation hat nicht stattgefunden. Entsprechend ist der in Fig. 3 rechts dargestellte Schenkel 26 des Aussteifungselements 7 immer noch quer zum Aufprallelement 4 angeordnet.

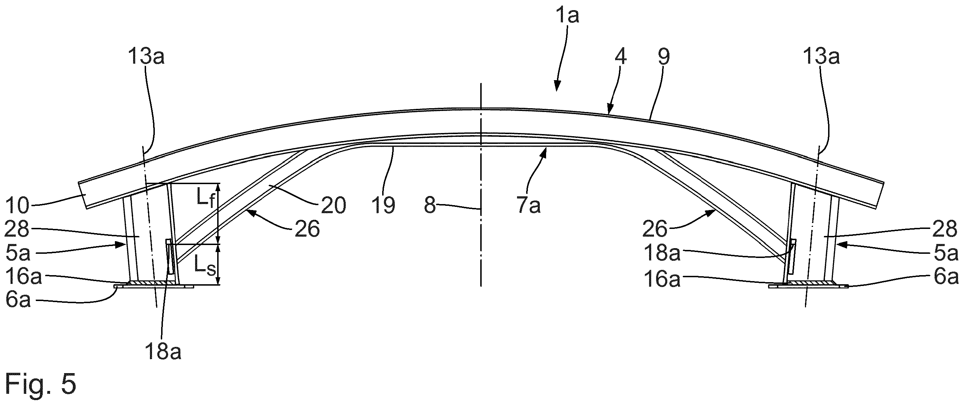

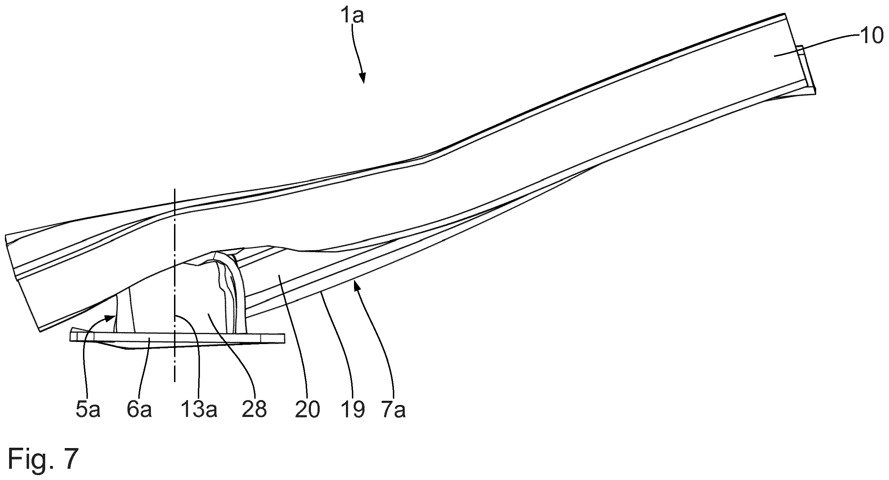

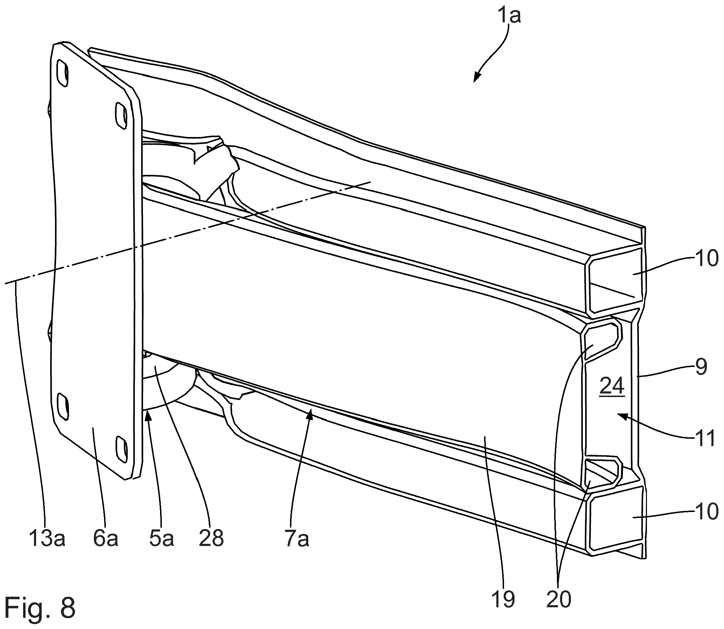

Im Folgenden wird unter Bezugnahme auf Fig. 5 bis 8 ein zweites Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile, erhalten dieselben Bezugszeichen mit einem nachgestellten a.

Der wesentliche Unterschied besteht in der Ausführung des Energieabsorptionselements 5a, das gemäß dem zweiten Ausführungsbeispiel als einteiliges Profilelement 28 ausgeführt ist. Bei der Energieabsorptionsvorrichtung 1a des zweiten Ausführungsbeispiels erfolgt die Energieabsorption ebenfalls durch kontrollierte Deformation, wobei das Profilelement 28 selbst deformiert wird, ohne dass eine Relativbewegung zwischen zwei verschieblich zueinander angeordneten Elementen erfolgt.

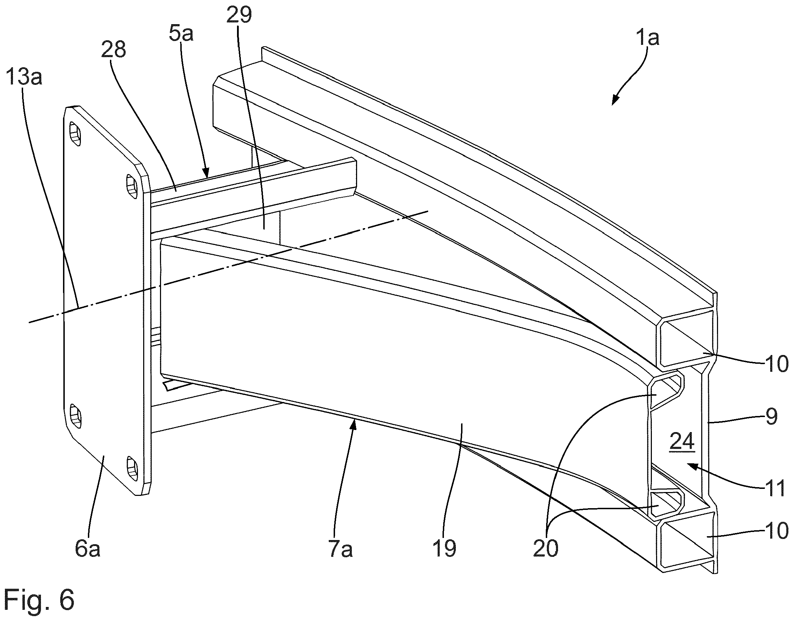

Wie insbesondere aus Fig. 6 ersichtlich, ist das Profilelement entlang der Längsachse 13a im Wesentlichen als offenes U-Profil ausgeführt. Die Längsachse 13a entspricht der Profillängsachse. Das U ist derart angeordnet, dass dessen Öffnung dem Aussteifungselement 7a zugewandt ist. Das Aussteifungselement 7a ist in die Öffnung des U eingeführt und am Boden 29 des U verweißt. Das bedeutet, dass das Aussteifungselement 7a unmittelbar mit dem Energieabsorptionselement 5a verschweißt ist.

An einem dem Aufprallelement 4 gegenüberliegenden Ende ist das Energieabsorptionselement 5a einstückig mit dem Verbindungselement 6a verbunden. Das Verbindungselement 6a ist als Rechteckplatte mit abgerundeten Ecken und Durchsteckbohrungen in den Eckenbereichen ausgeführt. Das Verbindungselement 6a hat ausschließlich die Funktion, die Energieabsorptionsvorrichtung 1a mit dem Fahrzeugrahmen 2 zu verbinden. Eine Verbindung des Aussteifungselements 7a mit dem Energieabsorptionselement 5a ist nicht durch das Verbindungselement 6a vorgesehen.

Die Steifigkeit und insbesondere die Knickstabilität des einteiligen Profilelements 28 ist durch dessen freie Länge L_{f} festgelegt. Als freie Länge L_{f} wird der Längenabschnitt entlang der Längsachse 13a verstanden, entlang der sich das Profilelement 28 frei deformieren kann. Die freie Länge L_{f} ist bei dem Profilelement 28 durch die dritte Schweißnaht 18a, entlang der das Aussteifungselement 7a an dem Profilelement 28 angeschweißt ist, und der ersten Schweißnaht 12a, entlang der das Profilelement der Rückseite des Deckelements 9 des Aufprallelements 4 angeschweißt ist, begrenzt. Der Längenabschnitt von der dritten Schweißnaht 18a zu der zweiten Schweißnaht 16a, die das Profilelement 28 mit dem Verbindungselement 6a verbindet, ist als eine Sockellänge L_{S} bezeichnet, die im Fall einer Deformation im Wesentlichen undeformiert verbleibt. Durch Veränderung des Längenverhältnisses von L_{f} und L_{S} kann die Knickstabilität und die Steifigkeit des Profilelements 28 verändert und insbesondere gezielt eingestellt werden.

Die Funktionsweise der Energieabsorptionsvorrichtung 1a gemäß dem zweiten Ausführungsbeispiel entspricht im Wesentlichen der des ersten Ausführungsbeispiels. Bei einem Aufprall des Fahrzeugs gegen ein Hindernis wird das Aufprallelement 4 entgegen der Fahrrichtung 3 zu dem Verbindungselement 6, das karosseriefest angeordnet ist, verschoben. In Folge dieser Verschiebung wird das Energieabsorptionselement 5a mit dem Profilelement 28 kontrolliert deformiert. Das Profilelement 28 ist eine Crashbox. Ein unbeabsichtigtes und insbesondere unkontrolliertes Ausknicken der Crashbox, also des Profilelements 28, ist verhindert.

## Patentansprüche

1. Energieabsorptionsvorrichtung für ein Fahrzeug umfassend
a. ein Aufprallelement (4) zum Einleiten von Aufprallenergie in die Energieabsorptionsvorrichtung (1; 1a),
b. mindestens ein mit dem Aufprallelement (4) verbundenes Energieabsorptionselement (5; 5a) zum Absorbieren der Aufprallenergie,
c. ein Aussteifungselement (7; 7a), das zum Aussteifen der Energieabsorptionsvorrichtung (1; 1a) das mindestens eine Energieabsorptionselement (5; 5a) mit dem Aufprallelement (4) verbindet,
d. mindestens zwei Energieabsorptionselemente (5; 5a),
**dadurch gekennzeichnet, dass**
e. genau ein Aussteifungselement (7; 7a) vorgesehen ist, das mit allen Energieabsorptionselementen (5; 5a) verbunden ist.

2. Energieabsorptionsvorrichtung gemäß Anspruch 1, **dadurch gekennzeichnet, dass** das Aussteifungselement (7; 7a) zumindest abschnittweise quer, insbesondere senkrecht, zu einer Längsachse (13; 13a) des mindestens einen Energieabsorptionselements (5; 5a) orientiert ist.

3. Energieabsorptionsvorrichtung gemäß einem der vorstehenden Ansprüche, **gekennzeichnet durch** ein Verbindungselement (6; 6a) zum, insbesondere lösbaren, Verbinden der Energieabsorptionsvorrichtung (1; 1a) mit dem Fahrzeug.

4. Energieabsorptionsvorrichtung gemäß einem der vorstehenden Ansprüche, **dadurch gekennzeichnet, dass** das Aufprallelement (4) als erstes Profilelement, insbesondere als erstes Hohlprofilelement, ausgeführt ist und insbesondere mindestens einen geschlossenen ersten Profilquerschnittsbereich (10) und/oder eine Querausnehmung (11) aufweist.

5. Energieabsorptionsvorrichtung gemäß einem der vorstehenden Ansprüche, **dadurch gekennzeichnet, dass** das Aussteifungselement (7; 7a) als zweites Profilelement, insbesondere als zweites Hohlprofilelement, ausgeführt ist und insbesondere mindestens einen geschlossenen zweiten Profilquerschnittsbereich (20) aufweist.

6. Energieabsorptionsvorrichtung gemäß einem der vorstehenden Ansprüche, **dadurch gekennzeichnet, dass** das Aussteifungselement (7; 7a), insbesondere bei einer Deformation der Energieabsorptionsvorrichtung (1; 1a), zumindest bereichsweise in das Aufprallelement (4) eintaucht.

7. Energieabsorptionsvorrichtung gemäß einem der vorstehenden Ansprüche, **dadurch gekennzeichnet, dass** die Quersteifigkeit der Energieabsorptionsvorrichtung (1; 1a) einstellbar ist.

8. Energieabsorptionsvorrichtung gemäß einem der vorstehenden Ansprüche, **dadurch gekennzeichnet, dass** das Energieabsorptionselement als Doppelrohrelement (5) ausgeführt ist, wobei ein Innenrohr (14) und ein Außenrohr (15) konzentrisch zur Längsachse (13) des Doppelrohrelements (5) angeordnet und entlang der Längsachse (13) verschieblich zueinander ausgeführt sind.

9. Energieabsorptionsvorrichtung gemäß Anspruch 8, **dadurch gekennzeichnet, dass** das Außenrohr (15), insbesondere mittels des Verbindungselements (6), mit dem Aussteifungselement sowie das Innenrohr (14) mit dem Aufprallelement (4) verbunden sind.

10. Energieabsorptionsvorrichtung gemäß Anspruch 8 oder 9, **dadurch gekennzeichnet, dass** das Aussteifungselement (7) mit dem Verbindungselement (6) fest verbunden ist.

11. Energieabsorptionsvorrichtung gemäß einem der Ansprüche 8 bis 10, **dadurch gekennzeichnet, dass** das Verbindungselement (6) eine Sollknickstelle (17) aufweist.

12. Energieabsorptionsvorrichtung gemäß einem der Ansprüche 1 bis 7, **dadurch gekennzeichnet, dass** das Energieabsorptionselement (5a) als einteiliges, insbesondere offenes, Profilelement (28) ausgeführt ist.

13. Energieabsorptionsvorrichtung gemäß Anspruch 12, **dadurch gekennzeichnet, dass** das Aussteifungselement (7a) an einer Verbindungsstelle mit dem einteiligen Profilelement (28) fest verbunden ist.

14. Energieabsorptionsvorrichtung gemäß Anspruch 12 oder 13, **dadurch gekennzeichnet, dass** die Steifigkeit, insbesondere die Knickstabilität, des einteiligen Profilelements (28) durch dessen freie Länge (L_{f}) entlang der Längsachse (13a) festgelegt ist, wobei die freie Länge (L_{f}) insbesondere durch das Aufprallelement (4) und das Aussteifungselement (7a) begrenzt ist.

## Claims

1. Energy absorption device for a vehicle, comprising
a. an impingement element (4) for introducing impact energy into the energy absorption device (1; 1a),
b. at least one energy absorption element (5; 5a), which is connected to the impingement element (4) for absorbing the impact energy,
c. a reinforcing element (7; 7a) which, in order to reinforce the energy absorption device (1; 1a), connects the at least one energy absorption element (5; 5a) to the impingement element (4),
d. at least two energy absorption elements (5; 5a),
**characterised in that**
e. exactly one reinforcing element (7; 7a) is provided that is connected to all of the energy absorption elements (5; 5a).

2. Energy absorption device according to claim 1, **characterised in that** the reinforcing element (7; 7a) is oriented transversely, in particular perpendicular, to a longitudinal axis (13; 13a) of the at least one energy absorption element (5; 5a) at least sectionally.

3. Energy absorption device according to any one of the preceding claims, **characterised by** a connecting element (6; 6a) for connecting, in particular detachably, the energy absorption device (1; 1a) to the vehicle.

4. Energy absorption device according to any one of the preceding claims, **characterised in that** the impingement element (4) is configured as a first profile element, in particular as a first hollow profile element, and in particular has at least one closed first profile cross-sectional area (10) and/or a transverse recess (11).

5. Energy absorption device according to any one of the preceding claims, **characterised in that** the reinforcing element (7; 7a) is designed as a second profile element, in particular as a second hollow profile element, and in particular has at least one closed second profile cross-sectional area (20).

6. Energy absorption device according to any one of the preceding claims, **characterised in that** the reinforcing element (7; 7a) penetrates into the impingement element (4) at least partly, in particular in the event of a deformation of the energy absorption device (1; 1a).

7. Energy absorption device according to any one of the preceding claims, **characterised in that** the transverse stiffness of the energy absorption device (1; 1a) is adjustable.

8. Energy absorption device according to any one of the preceding claims, **characterised in that** the energy absorption device is configured as a double tube element (5), wherein an inner tube (14) and an outer tube (15) are arranged concentrically with respect to the longitudinal axis (13) of the double tube element (5) and are displaceable relative to one another along the longitudinal axis (13).

9. Energy absorption device according to claim 9, **characterised in that** the outer tube (15), in particular by means of the connecting element (6), is connected to the reinforcing element and the inner tube (14) is connected to the impingement element (4).

10. Energy absorption device according to claim 8 or 9, **characterised in that** the reinforcing element (7) is rigidly connected to the connecting element (6).

11. Energy-absorbing device according to any one of claims 8 to 10, **characterised in that** the connecting element (6) has a predetermined bending point (17).

12. Energy absorption device according to any one of claims 1 to 7, **characterised in that** the energy absorption element (5a) is configured as a one-piece, in particular open, profile element (28).

13. Energy absorption device according to claim 12, **characterised in that** the reinforcing element (7a) is rigidly connected to the one-piece profile element (28) at a connection point.

14. Energy absorption device according to claim 12 or 13, **characterised in that** the stiffness, in particular the resistance to bending, of the one-piece profile element (28) is defined by its free length (L_{f}) along the longitudinal axis (13a), wherein the free length (L_{f}) is limited in particular by the impingement element (4) and the reinforcing element (7a).

## Revendications

1. Dispositif d'absorption d'énergie pour un véhicule comprenant
a. un organe d'impact (4) pour introduire de l'énergie d'impact dans le dispositif d'absorption d'énergie (1 ; 1a),
b. au moins un élément d'absorption d'énergie (5; 5a) raccordé à l'organe d'impact (4) pour absorber l'énergie d'impact,
c. un élément de renfort (7 ; 7a) reliant au moins un élément d'absorption d'énergie (5 ; 5a) à l'organe d'impact (4) pour renforcer le dispositif d'absorption d'énergie (1 ; 1a),
d. au moins deux éléments d'absorption d'énergie (5 ; 5a), **caractérisé en ce que**
e. un élément de renfort (7 ; 7a) est conçu avec précision et est raccordé à tous les éléments d'absorption d'énergie (5 ; 5a).

2. Dispositif d'absorption d'énergie selon la revendication 1, **caractérisé en ce que** l'élément de renfort (7 ; 7a) est orienté au moins par tronçon de manière transversale, en particulier perpendiculaire, à un axe longitudinal (13 ; 13a) du au moins un élément d'absorption d'énergie (5 ; 5a).

3. Dispositif d'absorption d'énergie selon l'une quelconque des revendications précédentes, **caractérisé en ce qu'**un élément de raccordement (6 ; 6a) permet de raccorder, en particulier de manière lâche, le dispositif d'absorption d'énergie (1 ; 1a) au véhicule.

4. Dispositif d'absorption d'énergie selon l'une quelconque des revendications précédentes, **caractérisé en ce que** l'organe d'impact (4) est conçu comme étant le premier élément de profilé, en particulier comme le premier élément de profilé creux et présente en particulier au moins une première zone transversale de profilé (10) fermée et/ou une cavité transversale (11).

5. Dispositif d'absorption d'énergie selon l'une quelconque des revendications précédentes, **caractérisé en ce que** l'élément de renfort (7 ; 7a) est conçu comme étant le second élément de profilé, en particulier comme le second élément de profilé creux et présente en particulier au moins une seconde zone transversale de profilé (20) fermée.

6. Dispositif d'absorption d'énergie selon l'une quelconque des revendications précédentes, **caractérisé en ce que** l'élément de renfort (7 ; 7a) s'insère au moins partiellement dans l'organe d'impact (4), en particulier lors d'une déformation du dispositif d'absorption d'énergie (1 ; 1a).

7. Dispositif d'absorption d'énergie selon l'une quelconque des revendications précédentes, **caractérisé en ce que** la résistance transversale du dispositif d'absorption d'énergie (1 ; 1a) est réglable.

8. Dispositif d'absorption d'énergie selon l'une quelconque des revendications précédentes, **caractérisé en ce que** l'élément d'absorption d'énergie est conçu comme étant un élément à double tube (5), un tube intérieur (14) et un tube extérieur (15) étant positionnés de manière concentrique par rapport à l'axe longitudinal (13) de l'élément à double tube (5) et étant conçus pour pouvoir se déplacer l'un par rapport à l'autre le long de l'axe longitudinal (13).

9. Dispositif d'absorption d'énergie selon la revendication 8, **caractérisé en ce que** le tube extérieur (15) est raccordé, en particulier, au moyen de l'élément de raccordement (6), à l'élément de renfort et le tube intérieur (14) est raccordé, en particulier, à l'organe d'impact (4).

10. Dispositif d'absorption d'énergie selon la revendication 8 ou 9, **caractérisé en ce que** l'élément de renfort (7) est solidement raccordé à l'élément de raccordement (6).

11. Dispositif d'absorption d'énergie selon l'une quelconque des revendications 8 à 10, **caractérisé en ce que** l'élément de raccordement (6) présente un point d'inflexion de consigne (17).

12. Dispositif d'absorption d'énergie selon l'une quelconque des revendications 1 à 7, **caractérisé en ce que** l'élément d'absorption d'énergie (5a) est conçu comme étant un élément de profilé (28) monobloc, en particulier ouvert.

13. Dispositif d'absorption d'énergie selon la revendication 12, **caractérisé en ce que** l'élément de renfort (7a) est solidement raccordé à un point de raccordement avec un élément de profilé (28) monobloc.

14. Dispositif d'absorption d'énergie selon la revendication 12 ou 13, **caractérisé en ce que** la résistance, en particulier la stabilité d'inflexion, de l'élément de profilé (28) monobloc est déterminée par sa longueur libre (L_{f}) le long de l'axe longitudinal (13a), la longueur libre (L_{f}) étant en particulier délimitée par l'organe d'impact (4) et l'élément de renfort (7a).
